# EUROPÄISCHE PATENTSCHRIFT

(11) **EP 2 246 208 B1**
(45) Veröffentlichungstag und Bekanntmachung des Hinweises auf die Patenterteilung: **05.09.2012**
(21) Anmeldenummer: 10158087.6
(22) Anmeldetag: 26.03.2010
(51) Int. Cl.: B60H 1/00, B60H 3/02

(54) **Kraftfahrzeugklimaanlage**
Motor vehicle air conditioning
Climatisation de véhicule automobile

(30) Priorität: 29.04.2009 DE 102009019128; 18.09.2009 DE 102009041795
(43) Veröffentlichungstag der Anmeldung: 03.11.2010
(73) Patentinhaber: Behr GmbH & Co. KG, 70469 Stuttgart (DE)
(72) Erfinder: Baruschke, Wilhelm, 73117, Wangen (DE); Dahm, Christoph, 71394, Kernen i.R. (DE); Lochmahr, Karl, 71665, Vaihingen/Enz (DE); Rais, Thomas, 71672, Marbach/Neckar (DE)
(74) Vertreter: Grauel, Andreas

(56) Entgegenhaltungen:
- EP-A1- 0 780 253
- EP-B1- 0 316 545
- DE-A1- 19 805 880
- DE-A1-102006 034 231
- DE-A1-102007 007 215
- DE-A1-102008 010 075
- DE-C1- 10 213 094

## Beschreibung

Die Erfindung betrifft eine Verfahren zur Regelung einer Kraftfahrzeugklimaanlage gemäß dem Oberbegriff des Anspruches 1 und eine Kraftfahrzeugklimaanlage gemäß dem Oberbegriff des Anspruches 10.

In Kraftfahrzeugklimaanlagen wird die einem Innenraum des Kraftfahrzeuges zuzuführende Luft erwärmt und/oder gekühlt. Hierfür ist die Kraftfahrzeugklimaanlage mit einem Verdampfer zum Kühlen der Luft und einer Heizvorrichtung zum Erwärmen der Luft versehen. Der Verdampfer ist Bestandteil eines Kältemittekreislaufes mit einem Verdichter, einem Kondensator und einer Expansionsvorrichtung für das Kältemittel. Der Kältekreislauf der Kraftfahrzeugklimaanlage bedarf einer Regelung, um die gewünschte Temperatur des Innenraumes zu erhalten.

Die in den Innenraum des Kraftfahrzeuges geleitete Luft weist Feuchtigkeit auf. Aus diesem Grund kann sich an dem Verdampfer Feuchtigkeit bzw. Kondenswasser bilden und/oder es kann an den Scheiben des Kraftfahrzeuges, insbesondere an einer Windschutzscheibe, Feuchtigkeit kondensieren, so dass die Scheiben beschlagen. Die Bildung von Kondenswasser an dem Verdampfer, welche dauerhaft auf dem Verdampfer bleibt, ist mit zahlreichen Nachteilen verbunden, z. B. einer Bakterien- oder Pilzbildung. Ferner beeinträchtigt Feuchtigkeit auf der Windschutzscheibe die Fahrsicherheit aufgrund verminderter Sicht nach außen.

Aus diesem Grund ist es erwünscht, nach dem Kühlen der Luft am Verdampfer unterhalb eines Vorverdampfer-Taupunktes, d. h. mit der Bildung von Kondenswasser an dem Verdampfer, den Verdampfer wieder zu trocken und gleichzeitig ein Beschlagen der Scheiben zu vermeiden.

Zur Vermeidung einer Beschlagsbildung auf der Windschutzscheibe kann die Temperatur des Verdampfers abgesenkt werden, so dass am Verdampfer Feuchtigkeit kondensiert, weil die Temperatur des Verdampfers unterhalb des Taupunktes der Luft vor dem Verdampfer (Vorverdampfer-Taupunkt) liegt. Die in den Innenraum geleitete Luft ist damit trockener und die Wahrscheinlichkeit eines Beschlagens der Scheiben kann damit abgesenkt werden. Nachteilig ist jedoch, dass beim Kondensieren der Feuchtigkeit am Verdampfer eine hohe Kälteleistung notwendig und somit viel Energie für den Betrieb des Verdichters erforderlich ist.

Aus der EP 0 316 545 B1 ist eine Klimaanlage für ein Kraftfahrzeug mit zur Entfeuchtung geeigneten Einrichtungen im Luftkanal bekannt, die von einem Mikrocomputer steuerbar sind. Die von Sensoren gemessenen Werte für Außentemperatur, Innentemperatur und Innenfeuchte werden an den Mikrocomputer übermittelt. Der Mikrocomputer berechnet aus den Werten für Außentemperatur, Innentemperatur und Innenfeuchte eine Grenzfeuchte als Verhältnis aus dem Sättigungsdampfdruck innen an der Scheibe und dem Sättigungsdampfdruck der Innenluft. Falls die Differenz von Grenzfeuchte und Innenfeuchte einen bestimmten Wert unterschreitet, werden die Einrichtungen zur Entfeuchtung betätigt.

Die Aufgabe der vorliegenden Erfindung besteht deshalb darin, ein Verfahren zur Regelung einer Kraftfahrzeugklimaanlage und eine Kraftfahrzeugklimaanlage zur Verfügung zu stellen, bei der ein befeuchteter Verdampfer gezielt getrocknet wird und ein Beschlagen der Scheiben verhindert werden kann mit einem möglichst geringen Energieaufwand.

Diese Aufgabe wird gelöst mit einem Verfahren zur Regelung einer Kraftfahrzeugklimaanlage mit den Schritten: Erfassen einer Temperatur der Luft nach dem Durchströmen eines Verdampfers, Leiten von Frischluft und/oder Umluft zu einem Verdampfer, Leiten von Luft durch den Verdampfer, vorzugsweise Kühlen der durch den Verdampfer geleiteten Luft, Umwälzen der Luft mittels eines Gebläses und vorzugsweise Ermitteln der Temperatur einer Windschutzschutzscheibe, wobei die absolute Feuchtigkeit der Luft vor und nach dem Durchströmen des Verdampfers ermittelt wird, wenigstens eine Maßnahme zur Trocknung des Verdampfers eingeleitet wird, sofern die absolute Feuchtigkeit der Luft nach dem Durchströmen des Verdampfers größer ist als die absolute Feuchtigkeit der Luft vor dem Durchströmen des Verdampfers, oder die relative Feuchtigkeit der Luft vor und nach dem Durchströmen des Verdampfers erfasst wird, sofern die Temperatur der Luft vor und nach dem Durchströmen des Verdampfers im Wesentlichen, insbesondere mit einer Differenz von weniger als 10, 7, 5, 3, 2, 1 oder 0,5 K, gleich ist und wenigstens eine Maßnahme zur Trocknung des Verdampfers eingeleitet wird, sofern die relative Feuchtigkeit der Luft nach dem Durchströmen des Verdampfers größer ist als die relative Feuchtigkeit der Luft vor dem Durchströmen des Verdampfers, wobei Temperatur der Luft vor dem Durchströmen des Verdampfers, die absolute Feuchtigkeit der Luft vor dem Durchströmen des Verdampfers oder die relative Feuchtigkeit der Luft vor dem Durchströmen des Verdampfers in dem Luftkanal erfasst wird, indem von einem ersten Temperatursensor die Temperatur und von einem ersten Feuchtigkeitssensor die relative Feuchtigkeit nur der Frischluft vor dem Durchströmen des Verdampfers erfasst wird und/oder von einem zweiten Temperatursensor die Temperatur und von einem zweiten Feuchtigkeitssensor die relative Feuchtigkeit nur der Umluft vor dem Durchströmen des Verdampfers erfasst wird.

Damit kann in vorteilhafter Weise separat und unabhängig die Temperatur und die relative Feuchtigkeit nur der Frischluft und/oder nur der Umluft erfasst oder gemessen werden. Aus diesen gemessenen Werten für die Temperatur und die relative Feuchtigkeit wird in Abhängigkeit der Menge an Frischluft und/oder Umluft, die zu dem Verdampfer geleitet wird, die Temperatur und die relative Feuchtigkeit der Luft in dem Luftkanal vor dem Durchströmen des Verdampfers ermittelt. Die Menge an Frischluft und/oder Umluft, die zu dem Verdampfer in dem Luftkanal geleitet wird, hängt von der Stellung einer Mischklappe bzw. den Stellungen einer Umluftklappe und Frischluftklappe ab. Die Stellungen der Klappen werden üblicherweise von einem Klimasteuergerät gesteuert oder geregelt, so dass die Klappenpositionen bekannt sind und insbesondere jederzeit aus einem Datenspeicher abrufbar sind. Dabei kann zu dem Verdampfer nur Frischluft, nur Umluft oder eine Mischung aus Frischluft oder Umluft geleitet werden. Wird beispielsweise nur Frischluft zu dem Verdampfer geleitet, entspricht die Temperatur und relative Feuchtigkeit der Luft der von dem Verdampfer der Temperatur und der relativen Feuchtigkeit der Frischluft, die von dem ersten Temperatursensor und dem ersten Feuchtigkeitssensor gemessen wird. Wird Frischluft und Umluft zu dem Verdampfer geleitet, entspricht die Temperatur und relative Feuchtigkeit der Luft vor dem Verdampfer einem gewichteten Wert zwischen der Temperatur und der relativen Feuchtigkeit der Frischluft und der Temperatur und der relativen Feuchtigkeit der Umluft.

Aus der Temperatur und der relative Feuchtigkeit nur der Frischluft und/oder nur der Umluft kann die Steuerung der Kraftfahrzeugklimaanlage optimiert und verbessert werden, weil nicht nur die Werte für die (Misch-)Temperatur und die relative (Misch-)Feuchtigkeit der Luft vor dem Verdampfer bekannt sind. Bei einer hohen Umlufttemperatur bzw. einer hohen Temperatur im Innenraum und einer niedrigen Frischlufttemperatur sowie einer gewünschten niedrigen Temperatur im Innenraum kann der Innenraum dadurch gekühlt werden, dass der Frischluftanteil erhöht wird anstelle die Verdampfertemperatur abzusenken. Damit kann Energie einspart werden. Dies gilt auch analog für die relative Feuchtigkeit. Die gesondert erfassten Werte für Temperatur und relativer Feuchtigkeit nur der Frischluft und nur der Umluft können analog auch für eine energiesparende Verhinderung des Beschlagens der Windschutzscheibe eingesetzt werden.

In einer weiteren Ausgestaltung wird die wenigstens eine Maßnahme zur Trocknung des Verdampfers eingeleitet, sofern die absolute Feuchtigkeit der Luft nach dem Durchströmen des Verdampfers um wenigstens 1, 3, 5, 7, 10, 15 oder 20 % größer ist als die absolute Feuchtigkeit der Luft vor dem Durchströmen des Verdampfers.

In einer weiteren Ausgestaltung wird die wenigstens eine Maßnahme zur Trocknung des Verdampfers eingeleitet, sofern die relative Feuchtigkeit der Luft nach dem Durchströmen des Verdampfers um wenigstens 1, 3, 5, 7, 10, 15 oder 20 % größer ist als die relative Feuchtigkeit der Luft vor dem Durchströmen des Verdampfers und die Temperatur der Luft vor und nach dem Durchströmen des Verdampfers im Wesentlichen gleich ist.

In einer weiteren Ausführungsform wird die Frischluft aus einem Schacht für Frischluft durch eine Frischluftleitung zu dem ersten Temperatursensor und dem ersten Feuchtigkeitssensor geleitet und/oder die Umluft aus einem Schacht für Umluft durch eine Umluftleitung zu dem zweiten Temperatursensor und dem zweiten Feuchtigkeitssensor geleitet.

In einer Variante wird aus der ermittelten Temperatur und relativen Feuchtigkeit der Luft vor dem Durchströmen des Verdampfers in der Kraftfahrzeugklimaanlage die absolute Feuchtigkeit der Luft vor dem Durchströmen des Verdampfers ermittelt, z. B. mittels eines hinterlegten hX-Diagrammes oder einer analytischen Berechnung.

In einer weiteren Ausgestaltung wird die absolute Feuchtigkeit der Luft nach dem Durchströmen des Verdampfers ermittelt indem die relative Feuchtigkeit der Luft nach dem Durchströmen des Verdampfers in der Kraftfahrzeugklimaanlage erfasst und aus der Temperatur und der relativen Feuchtigkeit der Luft nach dem Durchströmen des Verdampfers und die absolute Feuchtigkeit der Luft nach dem Durchströmen des Verdampfers ermittelt wird, z. B. mittels eines hinterlegten hX-Diagrammes oder einer analytischen Berechnung.

In einer weiteren Ausgestaltung wird die erfasste Temperatur und/oder relative Feuchtigkeit nur der Frischluft und/oder nur der Umluft für die Steuerung und/oder Regelung der Kraftfahrzeugklimaanlage genutzt. Dabei soll die Kraftfahrzeugklimaanlage möglichst energiesparend betrieben werden, d. h. die Kälteanlage nicht oder mit einer möglichst geringen Leistung betrieben werden, was eine möglichst hohen Verdampfertemperatur entspricht. Aufgrund der separat gemessenen Werte der Temperatur und der relativen Feuchtigkeit der Umluft und der Frischluft kann dies berücksichtigt werden. Liegt beispielsweis eine hohe relative Feuchtigkeit der Umluft und eine geringe relative Feuchtigkeit der Frischluft vor, kann mittels einer Erhöhung der Frischluftanteils ein Beschlagen der Scheiben verhindert werden. Außerdem soll bei sehr tiefen Außentemperaturen, z. B. weniger als 0° C, und bei sehr hohen Außentemperaturen, z. B. mehr als 27° C, der Anteil an Umluft möglichst hoch sein, um bei tiefen Außentemperaturen möglichst wenig Energie zum Erwärmen und bei sehr hohen Außentemperaturen möglichst wenig Energie zum Kühlen der Luft aufwenden zu müssen.

In einer Variante wird aus der Temperatur und der relativen Feuchtigkeit der Luft vor und/oder nach dem Durchströmen des Verdampfers in der Kraftfahrzeugklimaanlage ein Vorverdampfer-Taupunkt und/oder ein Nachverdampfer-Taupunkt ermittelt, ferner wird ein Taupunkt der Luft am Verdampfer ermittelt, wobei der Taupunkt der Nachverdampfer-Taupunkt oder die Temperatur der Luft nach dem Durchströmen des Verdampfers ist und vorzugsweise wird der Taupunkt der Luft am Verdampfer mit der Temperatur der Windschutzscheibe verglichen und die Kraftfahrzeugklimaanlage wird geregelt, so dass der Taupunkt kleiner ist als die Temperatur der Windschutzscheibe.

Der Taupunkt für eine Antibeschlag-Reglung ist der Nachverdampfer-Taupunkt. Abweichend hiervon kann Folgendes gelten: Der Taupunkt für eine Antibeschlag-Reglung ist der Nachverdampfer-Taupunkt, sofern die Luft an dem Verdampfer oberhalb des Vorverdampfer-Taupunktes gekühlt wird und vorzugsweise der Verdampfer geregelt getrocknet wird. Der Taupunkt für eine Antibeschlag-Regelung ist die Temperatur der Luft nach dem Verdampfer, sofern die Luft an dem Verdampfer unterhalb des Vorverdampfer-Taupunktes gekühlt wird, d. h. es tritt Kondensatbildung auf dem Verdampfer auf.

Vorzugsweise ist der Taupunkt der zu der Windschutzscheibe geleiteten Luft damit kleiner als die Temperatur der Windschutzscheibe, so dass an der Windschutzscheibe keine Kondensation aufgrund dieser Luft eintritt.

Insbesondere wird als Maßnahme zur Trocknung des Verdampfers die Kraftfahrzeugklimaanlage geregelt, so dass die Temperatur der Luft nach dem Durchströmen des Verdampfers größer ist als der Vorverdampfer-Taupunkt und/oder der Frischluftanteil der durch den Verdampfer geleiteten Luft erhöht wird und/oder die Gebläseleistung erhöht wird.

In einer zusätzlichen Ausgestaltung ist die Temperatur der Luft nach dem Durchströmen des Verdampfers geringfügig größer ist als der Vorverdampfer-Taupunkt, insbesondere ist die Temperatur der Luft nach dem Durchströmen des Verdampfers um weniger als 20, 15, 12, 10, 7, 5,4, 3, 2, 1 oder 0,5 K größer als der Vorverdampfer-Taupunkt. Die Feuchtigkeit auf dem Verdampfer verdunstet damit langsam, um ein Beschlagen der Scheiben zu vermeiden.

In einer ergänzenden Ausgestaltung ist während der wenigstens einen Maßnahme zur Trocknung des Verdampfers der Verdampfer bzw. eine Kälteanlage abgeschaltet oder die Luft am Verdampfer wird gekühlt, wobei die Temperatur der Luft nach dem Durchströmen des Verdampfers, vorzugsweise geringfügig, größer ist als der Vorverdampfer-Taupunkt, insbesondere ist die Temperatur der Luft nach dem Durchströmen des Verdampfers um weniger als 10, 7, 5, 4, 3, 2, 1 oder 0,5 K größer ist als der Vorverdampfer-Taupunkt, und/oder, vorzugsweise anschließend, wird die Kühlleistung des Verdampfers verringert zum Abschalten des Verdampfers bzw. der Kälteanlage.

In einer weiteren Ausgestaltung ist beim Abschalten des Verdampfers bzw. der Kälteanlage solange die Temperatur der Luft nach dem Durchströmen des Verdampfers geringfügig größer als der Vorverdampfer-Taupunkt, insbesondere ist die Temperatur der Luft nach dem Durchströmen des Verdampfers um weniger als 10, 7, 5, 4, 3, 2, 1 oder 0,5 K größer als der Vorverdampfer-Taupunkt, bis die absolute oder relative Feuchtigkeit der Luft vor und nach dem Durchströmen des Verdampfers im Wesentlichen gleich ist, insbesondere mit einer Abweichung von weniger als 30%, 20%, 10%, 5%, 2% oder 1%.

In einer weiteren Ausgestaltung beträgt eine vorgegebene Mindestdifferenz aus der Temperatur der Windschutzscheibe und des Taupunktes wenigstens 0,1, 1, 3 oder 5 K (beispielhaft). Die Mindestdifferenz ist erforderlich, um ein Beschlagen der Windschutzscheibe sicher verhindern zu können.

In einer Variante wird bei einem Unterschreiten der vorgegebenen Mindestdifferenz oder wenn die Temperatur der Windschutzscheibe kleiner ist als oder gleich ist wie der Taupunkt wenigstens eine Antibeschlag-Maßnahme eingeleitet, um die vorgegebene Mindestdifferenz zu erreichen bzw, ein Beschlagen der Windschutzscheibe zu vermeiden oder vorhandenes Kondensat auf der Windschutzscheibe zu entfernen.

Zweckmäßig sind wenigstens zwei Antibeschlag-Maßnahmen priorisiert und zuerst wird wenigstens eine Antibeschlag-Maßnahme mit einer höheren Priorität eingeleitet.

In einer zusätzlichen Ausführungsform haben Antibeschlag-Maßnahmen mit einer höheren Priorität einen geringeren Energieverbrauch als Antibeschlag-. Maßnahmen mit einer niedrigeren Priorität, Damit werden zuerst Antibeschlag-Maßnahmen ausgeführt mit einem niedrigen Energieverbrauch.

Insbesondere wird von einem Temperatursensor die Temperatur und einem Feuchtigkeitssensor die relative Luftfeuchtigkeit der durch einen Luftkanal strömenden Luft nach dem Verdampfer gemessen.

In einer weiteren Ausgestaltung wird der Vorverdampfer-Taupunkt und/oder der Nachverdampfer-Taupunkt aus den Daten zu der Temperatur und der Feuchtigkeit der Frischluft und/oder der Umluft und/oder der Luft nach dem Durchströmen des Verdampfers in der Kraftfahrzeugklimaanlage, insbesondere mittels eines hinterlegten hX-Diagrammes oder einer analytischen Berechnung, ermittelt.

In einer weiteren Ausgestaltung wird, vorzugsweise als Antibeschlags-Maßnahme, die Kraftfahrzeugklimaanlage geregelt, so dass der Vorverdampfer-Taupunkt kleiner ist als die Verdampfertemperatur (Temperatur der Luft nach dem Durchströmen des Verdampfers) und/oder der Vorverdampfer-Taupunkt ist der Taupunkt der Luft am Verdampfer. Damit tritt an dem Verdampfer im Wesentlichen keine Kondensatbildung ein und der Energieverbrauch ist gering.

In einer zusätzlichen Ausführungsform besteht kein Entfeuchtungsbedarf der Luft am Verdampfer und/oder vom Benutzer und/oder der Steuerungs- und/oder Regeleinheit ist kein Entfeuchtungsbedarf vorgegeben und/oder die vorgegebene Mindestdifferenz ist eingehalten und/oder die vorgegebene Mindestdifferenz wird mit wenigstens einer Antibeschlag-Maßnahme erreicht, die kein Absenken der Verdampfertemperatur erfordern und/oder die vorgegebene Mindestdifferenz wird mit wenigstens einer Antibeschlag-Maßnahme erreicht, die kein Absenken der Verdampfertemperatur unterhalb des Vorverdampfer-Taupunktes erfordern.

Zweckmäßig wird die Kraftfahrzeugklimaanlage geregelt, so dass die Verdampfertemperatur kleiner ist als der Vorverdampfer-Taupunkt, um die Luft am Verdampfer zu entfeuchten (auf dem Verdampfer bildet sich Kondenswasser). Dieser Betriebszustand wird vorzugsweise nur gewählt, wenn ein Unterschreiten der Mindestdifferenz mit anderen Antibeschfag-Maßnahme nicht mehr erreicht werden kann oder beispielsweise aufgrund einer Vorgabe eines Fahrzeuginsassen zur Temperatur im Innenraum eine derartige Verdampfertemperatur erforderlich ist oder ein Entfeuchten, z. B. wegen einer Vorgabe des Fahrzeuginsassen, gewünscht ist.

In einer zusätzlichen Ausführungsform besteht Entfeuchtungsbedarf der Luft am Verdampfer und/oder vom Benutzer wird eine Entfeuchtung der Luft vorgegeben und/oder von der Regeleinheit wird eine Entfeuchtung der Luft vorgegeben.

Vorzugsweise ist die Heizvorrichtung während des Kühlens der Luft am Verdampfer abgeschaltet oder eingeschaltet.

Erfindungsgemäße Kraftfahrzeugklimaanlage, umfassend einen Verdampfer, ein Gebläse, eine Heizvorrichtung und einen Verdampferternperafursensor und einen Feuchtigkeitssensor zur Erfassung der relativen Feuchtigkeit der Luft in einem Luftkanal nach dem Durchströmen des Verdampfers, wobei die Kraftfahrzeugklimaanlage einen ersten Temperatursensor zur Erfassung der Temperatur und einen ersten Feuchtigkeitssensor zur Erfassung relativen Feuchtigkeit nur der Frischluft, vorzugsweise von Frischluft aus einem Schacht für Frischluft vor dem Durchströmen des Verdampfers, umfasst und einen zweiten Temperatursensor zur Erfassung der Temperatur und einen zweiten Feuchtigkeitssensor zur Erfassung der relativen Feuchtigkeit nur der Umluft, vorzugsweise von Umluft aus einem Schacht für Umluft vor dem Durchströmen des Verdampfers, umfasst und/oder ein in dieser Schutzrechtsanmetdung beschriebenes Verfahren ausführbar ist. Der erste Temperatursensor sowie der erste Feuchtigkeitssensor und der zweite Temperatursensor sowie der zweite Feuchtigkeitssensor sind zu einem Doppelsensor integriert. Die Sensoren sind somit beispielsweise in einem gemeinsamen Gehäuse angeordnet.

Zweckmäßig sind der Verdampfertemperatursensor sowie der Feuchtigkeitssensor als Dreifachsensor zusammen mit dem ersten und zweiten Temperatursensor und dem ersten und zweiten Feuchtigkeitssensor integriert. Die Sensoren sind damit vorzugsweise in einem gemeinsamen Gehäuse angeordnet. Das gemeinsame Gehäuse kann ein- oder mehrteilig sein.

In einer Variante umfasst die Kraftfahrzeugklimaanlage eine Frischluftleitung und eine Umluftleitung und durch die Frischluftleitung ist aus einem Schacht für Frischluft Frischluft zu dem ersten Temperatursensor und dem ersten Feuchtigkeitssensor leitbar und durch die Umluftleitung ist aus einem Schacht für Umluft Umluft zu dem zweiten Temperatursensor und dem zweiten Feuchtigkeitssensor leitbar.

In einer zusätzlichen Ausgestaltung umfasst die Kraftfahrzeugklimaanlage eine Verdampferluftleitung und durch die Verdampferluftleitung ist durch den Verdampfer geleitete Luft zu dem Verdampfertemperatursensor und dem Feuchtigkeitssensor leitbar.

Vorzugsweise sind der Verdampfertemperatursensor und der Feuchtigkeitssensor in dem Luftkanal in Strömungsrichtung der Luft vor einem Gebläse angeordnet. Aufgrund des niedrigen Druckes in dem Luftkanal vor dem Gebläse als nach dem Verdampfer strömt die Luft ohne eine Luftfördereinrichtung aufgrund des Druckunterschiedes durch die Veradmpferluftleitung.

In einer zusätzlichen Variante ist der Verdampfer ein Speicherverdampfer. Der Speicherverdampfer kann für kurze Zeit, z. B. ein bis fünf Minuten, Kälte speichern, so dass bei einer abgeschalteten Kälteanlage, beispielsweise bei einem abgeschalteten Verbrennungsmotor eines Kraftfahrzeuges an einer Ampel, für kurze Zeit die Luft weiterhin gekühlt werden kann.

Im Nachfolgenden werden Ausführungsbeispiele der Erfindung unter Bezugnahme auf die beigefügten Zeichnungen näher beschrieben. Es zeigt:
- Fig. 1: einen stark schematisierten Querschnitt einer Kraftfahrzeugklimaanlage in einem ersten Ausführungsbeispiel,
- Fig. 2: einen Teilquerschnitt der Kraftfahrzeugklimaanlage in einem
- Fig. 3: zweiten Ausführungsbeispiel, einen Teilquerschnitt der Kraftfahrzeugklimaanlage in einem dritten Ausführungsbeispiel,
- Fig. 4: einen Teilquerschnitt der Kraftfahrzeugklimaanlage in einem vierten Ausführungsbeispiel,
- Fig. 5: ein hX-Diagramm,
- Fig.6: ein Blockschaltbild einer Anti-Beschlags-Regelung.
- Fig. 7: ein erstes Flussdiagramm zur Regelung der Trocknung eines Verdampfers und
- Fig. 8: ein zweites Flussdiagramm zur Regelung der Trocknung des Verdampfers.

Eine Kraftfahrzeugklimaanlage 1 weist einen Luftkanal 2 zum Durchleiten von Luft auf. Die Zufuhr der Luft in den Luftkanal 2 erfolgt durch einen Schacht 3 zur Zufuhr von Umluft und durch einen Schacht 4 zur Zufuhr von Frischluft. Eine Mischklappe 5 steuert den Anteil der Umluft und den Anteil der Frischluft, welcher in den Luftkanal 2 als Mischkanal für Umluft und/oder Frischluft einströmt. Ein Gebläse 6 in dem Luftkanal 2 saugt Luft aus der Umgebung und/oder aus dem Innenraum eines Kraftfahrzeuges (nicht dargestellt) an, je nach Stellung der Mischklappe 5. In Strömungsrichtung nach dem Gebläse 6 ist ein Verdampfer 7 in dem Luftkanal 2 angeordnet zur Kühlung der Luft. Der Verdampfer 7 ist Teil einer nicht dargestellten Kälteanlage mit einem Verdichter, einem Kondensator und einer Expansionsvorrichtung.

Ein Wärmetauscher 8 als Heizvorrichtung 16 ist durch nicht dargestellt Leitungen mit einem Kühlmittelkreislauf eines Motors (nicht dargestellt) des Kraftfahrzeuges verbunden und dient zum Erwärmen der durch den Luftkanal 2 geleiteten Luft. Die Heizvorrichtung 16 kann auch kann auch ein elektrisches Heizelement sein (nicht dargestellt). Der Wärmeaustauscher 8 kann mit einem Ventil in Leitungen (nicht dargestellt) angesteuert werden, so dass entweder kein Kühlmittel oder eine steuerbare Menge an Kühlmittel pro Zeiteinheit durch den Wärmeaustauscher 8 strömt. Der Luftkanal 1 mündet in die Schächte 9, 10 und 11. Der Schacht 9 ist den Entfrosteröffnungen der Windschutzscheibe (nicht dargestellt) zugeordnet, d. h. die durch den Schacht 9 strömende Luft wird zu der Windschutzscheibe geleitet. Der Schacht 10 ist den Belüftungsöffnungen an einer Armaturentafel und der Schacht 11 den Öffnungen am Fußraum zugeordnet. Die Schächte 9, 10 und 11 können mittels der Klappen 12, 13 und 14 unabhängig voneinander geöffnet und verschlossen werden, so dass die durch die Schächte 9, 10 und 11 strömende Luft gesteuert und/oder geregelt werden kann.

In Strömungsrichtung vor dem Verdampfer 7 ist in dem Schacht 4 für Frischluft ein erster Temperatursensor 17a und ein erster Feuchtigkeitssensor 18a und in dem Schacht 3 für Umluft ein zweiter Temperatursensor 17b und ein zweiter Feuchtigkeitssensor 18b angeordnet. Der erste Temperatursensor 17a erfasst die Temperatur nur der Frischluft in dem Schacht 4 und der erste Feuchtigkeitssensor 18a erfasst die relative Feuchtigkeit nur der Frischluft in dem Schacht 4. In analoger Weise erfasst der zweite Temperatursensor 17b die Temperatur nur der Umluft in dem Schacht 3 und der zweite Feuchtigkeitssensor 18b erfasst die relative Feuchtigkeit nur der Umluft in dem Schacht 3. Die Sensoren 17a, 17b, 18a, 18b messen die Temperatur und die relative Luftfeuchtigkeit unabhängig von der Stellung der Mischklappe 5 bzw. dem Frisch- und/oder Umluftanteil der Luft vor dem Verdampfer 7. Ein Verdampfertemperatursensor 19 erfasst die Temperatur der durch den Luftkanal 2 strömenden Luft nach dem Durchleiten durch den Verdampfer 7 und eine Feuchtigkeitssensor 21 erfasst die relative Feuchtigkeit der durch den Luftkanal 2 strömenden Luft nach dem Durchleiten durch den Verdampfer 7. Abweichend hiervon kann der Verdampfertempertursensor 19 auch an dem Verdampfer 7 angebracht sein (nicht dargestellt). Ein Heizungstemperatursensor 20 erfasst die Temperatur der durch den Luftkanal 2 strömenden Luft nach dem Durchleiten durch den Wärmetauscher 8 bzw. die Heizvorrichtung 16.

Aus den von den Sensoren 17a, 17b, 18a und 18b erfassten Daten wird in Abhängigkeit von der Stellung der Mischklappe 5 die Temperatur und die relative Luftfeuchtigkeit der Luft in dem Luftkanal 2 vor dem Verdampfer 7 ermittelt, Damit können sowohl die Temperatur und die relative Feuchtigkeit nur der Frischluft und nur der Umluft und die Temperatur und die relative Feuchtigkeit der Luft in dem Luftkanal 2 vor dem Verdampfer 7 ermittelt werden. Bei der Steuerung und Regelung der Kraftfahrzeugklimaanlage 1 können damit, insbesondere für einen möglichst energiesparenden Betrieb, auch die Temperatur und die relative Feuchtigkeit nur der Frischluft und/oder nur der Umluft berücksichtigt werden.

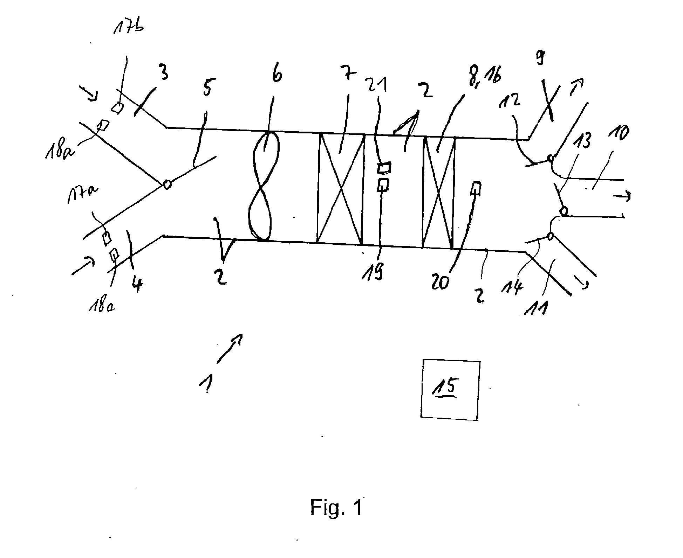

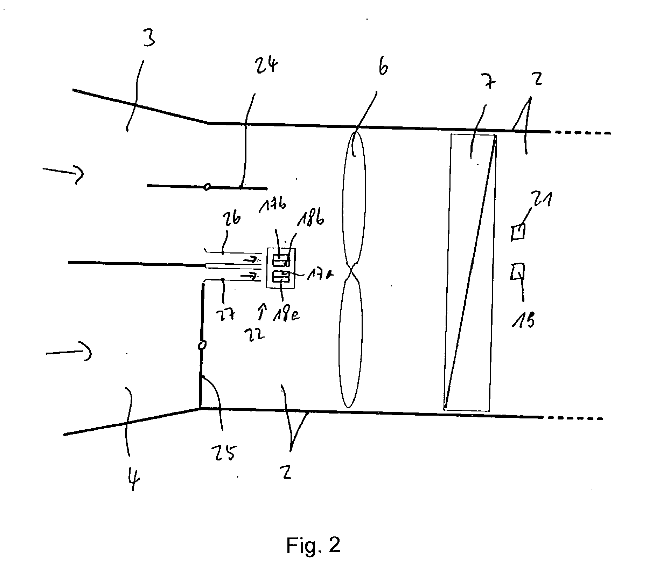

In Fig. 2 ist ein Teilquerschnitt der Kraftfahrzeugklimaanlage 1 in einem zweiten Ausführungsbeispiel dargestellt. Im Nachfolgenden werden im Wesentlichen nur die Unterschiede zu dem ersten Ausführungsbeispiel gemäß Fig. 1 beschrieben. Die Sensoren 17a, 17b, 18a und 18b sind in einem Doppelsensor 22 integriert und in dem Luftkanal 2 angeordnet. Anstelle der Mischklappe 5 wird eine Frischluftklappe 25 und eine Umluftklappe 24 zur Steuerung des Anteils an Frischluft und Umluft in dem Luftkanal 2 genutzt. Die Frischluft wird durch eine Frischluftleitung 27 aus dem Schacht 4 für Frischluft zu dem ersten Temperatursensor 17a und dem ersten Feuchtigkeitssensor 18a geleitet und die Umluft durch eine Umluftleitung 26 aus dem Schacht 3 für Umluft zu dem zweiten Temperatursensor 17b und dem zweiten Feuchtigkeitssensor 18b geleitet. Die Sensoren 17a, 17b, 18a und 18b können damit aufgrund einer Anordnung in einem Gehäuse einfach und kostengünstig gebaut werden.

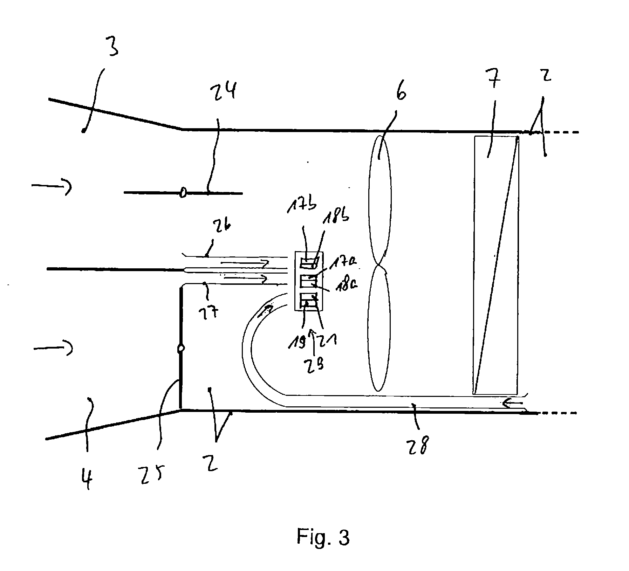

In Fig. 3 ist ein Teilquerschnitt der Kraftfahrzeugklimaanlage 1 in einem dritten Ausführungsbeispiel dargestellt. Im Nachfolgenden werden im Wesentlichen nur die Unterschiede zu dem zweiten Ausführungsbeispiel gemäß Fig. 2 beschrieben. Die Sensoren 17a, 17b, 18a und 18b sowie der Verdampfertemperatursensor 19 und der Feuchtigkeitssensor 21 sind als Dreifachsensor 29 in einem Gehäuse integriert und in dem Luftkanal 2 angeordnet. Die Luft nach dem Durchströmen des Verdampfers 7 wird durch eine Verdampferluftleitung 28 zu den Sensoren 19, 21 geleitet. Die Sensoren 17a, 17b, 18a, 18b, 19, 21 sind vor dem Gebläse 6 in dem Luftkanal 2 angeordnet und der Druck in dem Luftkanal 2 ist vor dem Gebläse 6 geringer als nach dem Verdampfer 7, weil die Luft unter Druck von dem Gebläse 6 in den Luftkanal 2 in Strömungsrichtung der Luft nach dem Gebläse 6 in den Luftkanal 2 eingeleitet wird. Damit strömt die Luft allein aufgrund des Druckunterschiedes durch die Verdampferluftleitung 28 zu den Sensoren 19, 21 geleitet.

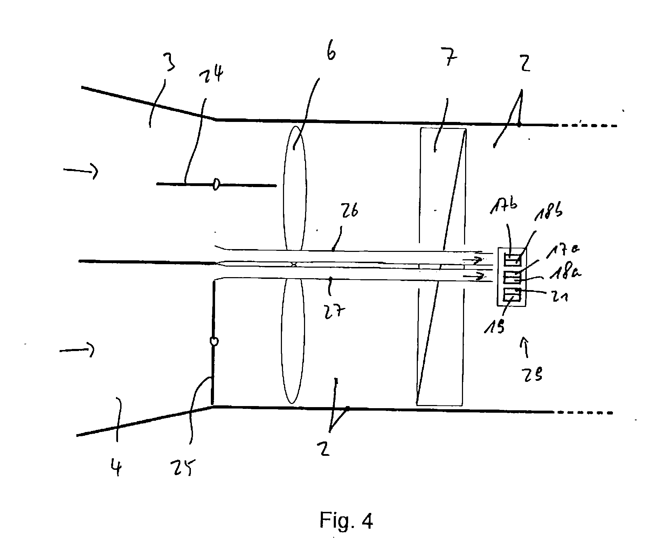

In Fig. 4 ist ein Teilquerschnitt der Kraftfahrzeugklimaanlage 1 in einem vierten Ausführungsbeispiel dargestellt. Im Nachfolgenden werden im Wesentlichen nur die Unterschiede zu dem dritten Ausführungsbeispiel gemäß Fig. 3 beschrieben. Die Sensoren 17a, 17b, 18a, 18b, 19 und 21 sind als Dreifachsensor 29 in dem Luftkanal 2 in Strömungsrichtung der Luft nachdem Verdampfer 7 angeordnet. Die Umluftleitung 26 und die Frischluftleitung 27 ist somit länger als in dem dritten Ausführungsbeispiel ausgeführt und durch den Verdampfer 7 geführt. Die durch die Umluftleitung 26 und die Frischtuftleitung 27 geleitete Luft wird mittels einer nicht dargestellten Luftfördereinrichtung, z. B. einem Minigebläse, zu den Sensoren 17a, 17b, 18a und 18b geleitet, weil der Druck in dem Luftkanal 2 nach dem Verdampfer 7 größer ist als der Druck in dem Schacht 3 und 4. Die zu den Sensoren 19, 21 geleitete Luft braucht nicht durch die Verdampferluftleitung 28 geleitet werden, weil die Sensoren 19, 21 in dem Luftkanal 2 angeordnet sind, welche von der durch den Verdampfer 7 geleiteten Luft durchströmt wird.

Die von den Sensoren 17a, 17b, 18a, 18b, 19, 20 und 21 erfassten Daten werden zu einer Steuerungs- und/oder Regeleinheit 15 der Kraftfahrzeugklimaanlage 1 mittels nicht dargestellter elektrischer Leitungen geleitet. Abweichend hiervon können die Daten mit einem Datenbus, z. B. LIN, Mulitplex-Verfahren oder PWM-Modulation zu der Steuerungs- und/oder Regeleinheit, vorzugsweise in codierter Form, übertragen werden.

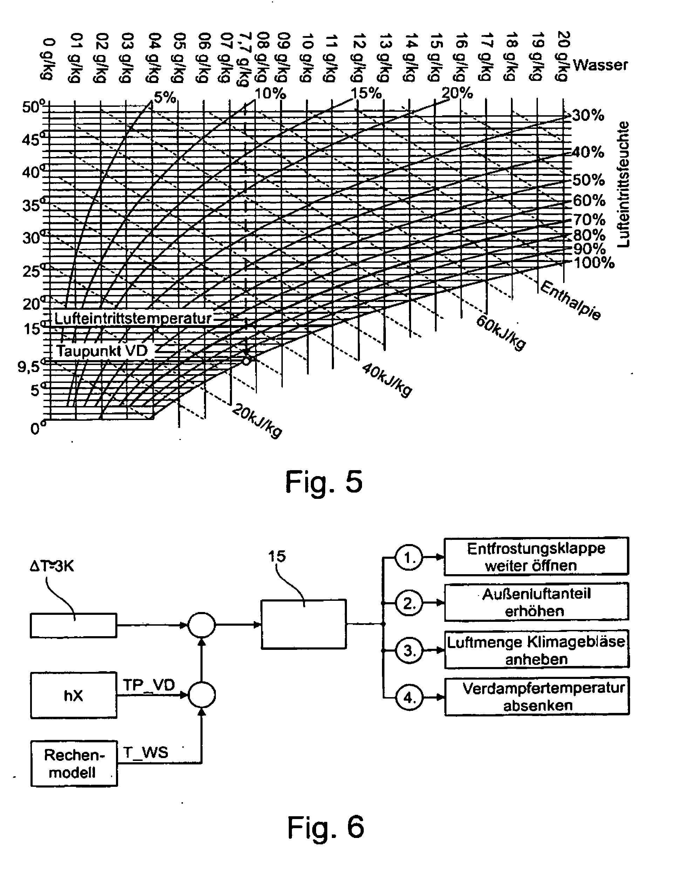

In der Steuerungs- und/oder Regeleinheit 15, im Nachfolgenden nur Regeleinheit 15 genannt, wird aus der von dem Temperatursensoren 17a, 17b, Verdampfertemperatursensor 19 und den Feuchtigkeitssensoren 18a, 18b, 21 gemessenen Temperatur und relativen Luftfeuchtigkeit der Luft ein Vorverdampfer-Taupunkt und ein Nachverdampfer-Taupunkt der Luft mittels eines hinterlegten hX-Diagrammes ermittelt. Abweichend hiervon kann der Vorverdampfer-Taupunkt und Nachverdampfer-Taupunkt auch analytisch berechnet werden. Der Taupunkt ist die Temperatur, ab der bei einem Unterschreiten eine Kondensation von Wasser eintritt, In dem in Fig. 5 dargestellten Beispiel wurde eine Temperatur von 15° C und eine relative Feuchtigkeit von 70 % in dem Luftkanal 2 vor dem Verdampfer 7 ermittelt. Damit ergibt sich ein Vorverdampfer-Taupunkt von 9,5° C. Die absolute Luftfeuchtigkeit liegt bei ungefähr 7,7 g/kg.

Von der Regeleinheit 15 wird mittels der von den Sensoren 17a, 17b, 18a, 18b, 19 und 21 erfassten Daten die absolute Luftfeuchtigkeit der Luft vor dem Durchleiten durch den Verdampfer 7 (abs_Wassermenge_evapo-in) und die absolute Luftfeuchtigkeit der Luft nach dem Durchleiten durch den Verdampfer 7 (abs_Wassermenge_evapo-out) mit dem hinterlegten hX-Diagramm ermittelt.

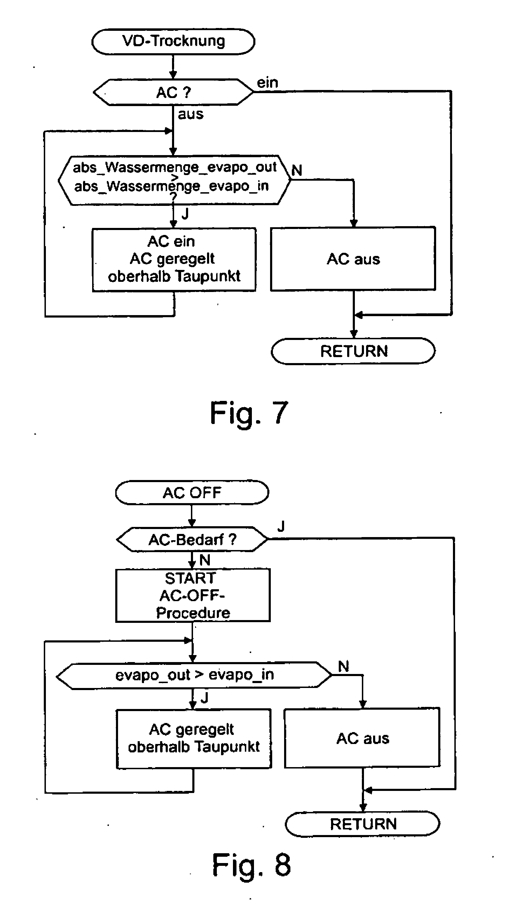

In Fig. 7 ist ein erstes Flussdiagramm zur Regelung der Trocknung des Verdampfers 7 dargestellt. Die Abkürzung "VD-Trocknung" steht für Verdampfer-Trocknung und die Abkürzung "AC" für Kraftfahrzeugklimanlage 1. Bei einer abgeschalteten Kraftfahrzeugklimaanlage 1 (es besteht nur kein Bedarf zum Kühlen der Luft am Verdampfer 7) wird von der Regeleinheit 15 die absolute Luftfeuchtigkeit der Luft vor dem Durchleiten durch den Verdampfer 7 (abs_Wassermenge_evapo-in) mit der absolute Luftfeuchtigkeit der Luft nach dem Durchleiten durch den Verdampfer 7 (abs_Wassermenge_evapo-out) zur Ermittlung eines Verdampfertrocknungsbedarfs verglichen und sofern abs_Wassermenge_evapo-out größer ist als abs_Wassermenge_evapo-in die Kraftfahrzeugklimaanlage 1 bzw. der Verdampfer 7 so geregelt, dass die Temperatur der Luft nach dem Verdampfer 7 geringfügig, z. B. 0, 5, 1, 2, 3, 4, 5 oder 10 K, größer ist als der Vorverdampfer-Taupunkt, z. B. mittels Kühlen der Luft am Verdampfer 7.

Ist die Temperatur der Luft nach dem Verdampfer 7 wesentlich größer als der Vorverdampfer-Taupunkt und besteht an dem Verdampfer 7 ein Trocknungsbedarf, d. h. dass abs_Wassermenge_evapo-out größer ist als abs_Wassermenge_evapo-in, verdunstet das Kondenswasser auf dem Verdampfer 7 schnell, so dass das Risiko einer Kondenwasserbildung auf der Windschutzscheibe hoch ist, weil die zu der Windschutzscheibe geleitete Luft eine hohe absolute und relative Feuchtigkeit aufweist. Aus diesem Grund wird die Kraftfahrzeugklimaanlage 1 dahingehend geregelt, dass die Temperatur der Luft nach dem Verdampfer 7 geringfügig größer ist als der Vorderdampfer-Taupunkt und damit das Kondenswasser auf dem Verdampfer 7 nur langsam verdunstet, so dass die absolute und relative Feuchtigkeit der zu der Windschutzscheibe geleiteten Luft an dem Verdampfer 7 nur geringfügig erhöht wird. Es ist damit ein gezieltes und geregeltes Trocknen des Verdampfers 7 möglich.

Bei einer abgeschalteten Kraftfahrzeugklimaanlage 1, was hier lediglich bedeutet dass an dem Verdampfer 7 die Luft nicht gekühlt wird, ist die Temperatur der Luft vor und nach dem Durchleiten durch den Verdampfer 7 im Wesentlichen gleich, so dass zur Ermittlung des Verdampfertrocknungsbedarfes (bei Feuchtigkeit oder Kondenswasser auf dem Verdampfer 7 besteht Verdampfertrocknungsbedarf) auch nur die relative Feuchtigkeit der Luft vor und nach dem Verdampfer 7 verglichen werden kann. Ist die relative Feuchtigkeit der Luft nach dem Verdampfer 7 größer als vor dem Verdampfer 7 besteht Verdampfertrocknungsbedarf, weil das Kondenswassers auf dem Verdampfer 7 verdunstet.

Ist abs_Wassermenge_evapo-out nicht größer ist als abs_Wassermenge_evapo-in oder die relative Feuchtigkeit nach dem Verdampfer 7 nicht größer als die relative Feuchtigkeit vor dem Verdampfer 7 besteht kein Verdampfertrockungsbedarf und die Kraftfahrzeugklimaanlage 1 kann ausgeschaltet werden oder bleiben, sofern keine Kühlung der in den Fahrzeuginnenraum geleiteten Luft erforderlich ist. Eine geregelte und langsame Trocknung des Verdampfers 7 ist dabei nicht erforderlich.

Auch bei einem Kühlen der durch den Verdampfer 7 geleiteten Luft, wobei die Temperatur der Luft nach dem Verdampfer 7 oberhalb des Vorverdampfer-Taupunktes liegt, ist es sinnvoll in analoger Weise bei einem Verdampfertrocknungsbedarf das Kondenswasser auf dem Verdampfer 7 langsam und geregelt zu verdunsten, indem die Temperatur der Luft nach dem Verdampfer 7 geringfügig größer ist als der Vorderdampfer-Taupunkt.

Bei einem Kühlen der durch den Verdampfer 7 geleiteten Luft, wobei die Temperatur der Luft nach dem Verdampfer 7 unterhalb des Vorverdampfer-Taupunktes liegt, ist eine Trocknung des Verdampfers 7 nicht möglich, so dass eine Abfrage gemäß dem ersten Blockschaltbild nicht relevant und sinnvoll ist.

In Fig. 8 ist ein zweites Flussdiagramm zur Regelung der Trocknung des Verdampfers 7 beim Ausschalten oder Herunterfahren der Kraftfahrzeugklimaanlage 1 bzw. der Kühlleistung des Verdampfers 7 dargestellt. Die Abkürzung "AC-OFF" bedeutet, dass die Kraftfahrzeugklimaanlage 1, d. h. das Kühlen mit dem Verdampfer 7, abgeschaltet werden soll. Besteht kein Bedarf zum Kühlen der Luft ("AC-Bedarf": nein), wird die Abschaltvorgang der Kraftfahrzeugklimaanlage 1 gestartet ("START AC-OFF-Procedure"). Ist abs_Wassermenge_evapo-outnicht größer ist als abs_Wassermenge_evapo-in (in Fig. 8 lediglich "evapo-out größer als evapo-in" dargestellt), besteht kein Trocknungsbedarf für den Verdampfer 7 und die Kälteleistung des Verdampfers 7 kann ohne besondere Regelung schnell abgeschaltet werden. Ist abs_Wassermenge_evapo-out größer ist als abs_Wassermenge_evapo-in, besteht Trocknungsbedarf für den Verdampfer 7 und der Verdampfer 7 bzw, die Kraftfahrzeugklimaanlage 1 wird geregelt abgeschaltet ("AC geregelt oberhalb Taupunkt"). Dabei wird die Kraftfahrzeugklimaanlage 1 bzw. der Verdampfer 7 so geregelt, dass die Temperatur der Luft nach dem Verdampfer 7 geringfügig größer ist als der Vorverdampfer-Taupunkt, so dass das Kondenswasser auf dem Verdampfer 7 langsam verdunstet und damit das Risiko des Beschlagens der Scheiben gering gehalten wird. Ist beim Beginn von "START AC-OFF-Procedure" die Temperatur der Luft nach dem Verdampfer 7 kleiner als der Vorverdampfer-Taupunkt erfolgt die Regelung dahingehend, dass die Temperatur der Luft nach dem Verdampfer 7 schnellstmöglich, d. h. ohne eine Regelung einer Verzögerung (die Leistung des Verdichters wird sofort auf das entsprechende Maß heruntergefahren), den Vorverdampfer-Taupunkt erreicht, physikalisch bedingt entspricht anschließend die Temperatur der Luft nach dem Verdampfer 7 eine bestimmte Zeit dem Vorverdampfer-Taupunkt und danach wird die Temperatur der Luft nach dem Verdampfer 7 auf einen Wert gebracht, der geringfügig größer ist als der Vorverdampfer-Taupunkt bis kein Verdampfertrockungsbedarf mehr besteht. Nachdem kein Verdampfertrocknungsbedarf (abs_Wassermenge_evapo-out nicht größer ist als abs_Wassermenge_evapo-in) mehr besteht, d. h. das Kondenswasser auf dem Verdampfer 7 verdunstet ist, wird das Kühlen der Luft am Verdampfer 7 abgeschaltet ("AC aus").

Dabei kann in obigen Beispielen die Regelung der Temperatur der Luft nach dem Verdampfer 7 auch dahingehend erfolgen, dass der Grad an Verdampfertrocknungsbedarf berücksichtigt wird, um ein Beschlagen zu vermeiden. Je größer der Grad an Verdampfertrocknungsbedarf ist, desto kleiner wird die Differenz aus der Temperatur der Luft nach dem Verdampfer und dem Vorverdampfer-Taupunkt geregelt und umgekehrt. Der Grad an Verdampfertrocknungsbedarf wird aus der Größe der Differenz zwischen abs_Wassermenge_evapo-out und abs_Wassermenge_evapo-in oder der relative Feuchtigkeit der Luft nach dem Verdampfer 7 und der relative Feuchtigkeit vor dem Verdampfer 7 bestimmt. Der Grad an Verdampfertrocknungsbedarf ist direkt proportional oder entspricht der Größe der eben genannten Differenz. Bei einem hohen Grad an Verdampfertrocknungsbedarf ist eine große Menge an Kondenswasser auf dem Verdampfer 7 vorhanden, so dass das Kondenswasser sehr langsam zu verdunsten ist, um ein Beschlagen der Scheiben zu vermeiden.

Ferner kann bei der Regelung der Kraftfahrzeugklimaanlage zusätzlich optional auch die Temperatur der Windschutzscheibe berücksichtigt werden, um ein Beschlagen der Scheiben zu vermeiden.

Die Temperatur der Windschutzscheibe wird entweder von einem Temperatursensor an der Windschutzscheibe (nicht dargestellt) gemessen oder mittels eines Rechenmodells aus verschiedenen Parametern, z. B. Innentemperatur, Außentemperatur, Geschwindigkeit, Sonneneinstrahlung, Förderleistung des Gebläses 6 und/oder der Stellung der Klappe 12 als Entfrostungsklappe 12, ermittelt.

Damit an der Windschutzscheibe kein Beschlagen, d. h. keine Kondensation, eintritt, muss der Taupunkt der zu der Windschutzscheibe geleiteten Luft kleiner sein als die Temperatur der Windschutzscheibe. Dabei wird die Leistung der Kälteanlage, d. h. die Verdampfertemperatur (Temperatur der Luft nach dem Verdampfer 7), möglichst dahingehend geregelt, dass die Verdampfertemperatur größer ist als der Vorverdampfer-Taupunkt um eine Kondensation an dem Verdampfer 7 zu vermeiden, damit für den Betrieb der Kälteanlage keine großen Energiemengen erforderlich sind.

Die Differenz zwischen der Temperatur der Windschutzscheibe und dem Nachverdampfer-Taupunkt muss beispielsweise größer sein als 3 K, um eine Bildung von Kondensat an der Windschutzscheibe sicher zu vermeiden. Es ist eine bestimmte Mindestdifferenz erforderlich, um mit ausreichender Sicherheit ein Beschlagen zu vermeiden. Die Temperatur der Windschutzscheibe ist somit um wenigstens 3 K größer als der Nachverdampfer-Taupunkt. Die Kraftfahrzeugklimaanlage 1 wird von der Regeleinheit 15 dahingehend geregelt, dass diese Differenz vorhanden ist, damit kein Beschlagen der Scheiben eintritt. Bei einem Absinken der Differenz auf einen Betrag unter 3 K werden von der Regeleinheit 15 Antibeschlag-Maßnahmen ergriffen, um ein Beschlagen der Windschutzscheibe zu verhindern. Dabei werden zuerst diejenigen Antibeschlag-Maßnahmen oder diejenige Antibeschlag-Maßnahmen ergriffen, welche mit einem geringen (Mehr-)Verbrauch an Energie durch die Kraftfahrzeugklimaanlage 1 verbunden sind. Erst wenn eine Antibeschlag-Maßnahme mit einem geringen zusätzlichen Energieverbrauch nicht mehr ausreichen, um die Mindestdifferenz zwischen der Temperatur der Windschutzscheibe und dem Taupunkt zu gewährleisten, wird eine Antibeschlag-Maßnahme oder werden Antibeschlag-Maßnahmen ergriffen, welche mit einem höheren Energieverbrauch verbunden sind. Sofern kein Verdampfertrocknungsbedarf besteht kann auch die Differenz zwischen der Temperatur der Windschutzscheibe und dem Vorverdampfer-Taupunkt gebildet werden zur Vermeidung von Kondensatbildung auf der Windschutzscheibe.

Dabei werden die in der aufgeführten Reihenfolge die folgenden Antibeschlag-Maßnahmen ergriffen: 1.) Öffnen der Entfrostungsklappe 12, 2.) Erhöhen des Anteils der Frischluft mittels Bewegen der Mischluftklappe 5, 3.) Erhöhen der Förderleistung des Gebläses 6 und 4.) Absenken der Temperatur des Verdampfers 7 unterhalb des Vorverdampfer-Taupunktes der Luft in dem Luftkanal 2 vor dem Durchströmen des Verdampfers 7 mittels einer Erhöhung der Kühlleistung der Kälteanlage, z. B. mittels einer größeren Leistung des Verdichters. Die erste Antibeschlag-Maßnahme, nämlich das Öffnen der Entfrostungsklappe 12, erfordert nur eine geringe Energie. Durch das Öffnen der Entfrostungsklappe 12 oder der Erhöhung der Förderleistung des Gebläses 6 bei wenigstens teilweise geöffneter Entfrostungsklappe 12 wird eine größere Luftmenge zu der Windschutzscheibe geleitet, so dass dadurch eine größere Wärmeübertragung von der zu der Windschutzscheibe geleiteten Luft auf die Windschutzscheibe erfolgt, so dass sich die Windschutzscheibe schneller erwärmt und dadurch die Wahrscheinlichkeit der Kondensation von Wasser auf der Windschutzscheibe vermindert wird bzw. die Differenz zwischen der Temperatur der Windschutzscheibe und dem Taupunkt erhöht wird.

Die vierte Antibeschlag-Maßnahme, d. h. das Absenken der Verdampfertemperatur unterhalb des Vorverdampfer-Taupunktes der Luft in dem Luftkanal 2 vor dem Durchströmen des Verdampfers 7, erfordert eine große Energiemenge. Mit dem Absenken der Verdampfertemperatur unterhalb des Taupunkt der Luft in dem Luftkanal 2 vor dem Durchströmen des Verdampfers 7 wird die Luft in dem Luftkanal 2 entfeuchtet, d. h. an dem Verdampfer 7 bildet sich Kondenswasser. Im obigen Beispiel zum hX-Diagramm sinkt damit die absolute Luftfeuchtigkeit unterhalb von 7,7 g/kg ab und auch der Taupunkt der Luft am Verdampfer 7 sinkt unter 9,5° C ab, z. B. auf 7° C, wobei in diesem Betriebszustand die Verdampfertemperatur dem Taupunkt der Luft am Verdampfer 7 entspricht. Damit kann ein gezieltes und kontrolliertes Entfeuchten der durch den Luftkanal 2 geleiteten Luft gesteuert und/oder geregelt werden.

Die vierte Antibeschlag-Maßnahme wird deshalb nur dann ergriffen, wenn mit den anderen Antibeschlag-Maßnahmen ein Beschlagen der Windschutzscheibe nicht mehr verhindert werden kann. Bei einem Absenken der Verdampfertemperatur unterhalb des Vorverdampfer-Taupunktes kondensiert an dem Verdampfer 7 Wasser, so dass sich dadurch die absolute Luftfeuchtigkeit der zu der Windschutzscheibe geleiteten Luft vermindert und damit auch das Beschlagsrisiko verkleinert wird. Bei einer Kondensatbildung am Verdampfer 7 ist der Taupunkt der Luft am Verdampfer 7 die Temperatur der Luft nach dem Durchleiten durch den Verdampfer 7 (Verdampfertemperatur), die von dem Verdampfertemperatursensor 19 gemessen wird. In einem Betriebszustand der Kraftfahrzeugklimaanlage 1 mit Kondensatbildung an dem Verdampfer 7 wird die Differenz zwischen der Temperatur der Windschutzscheibe und der Verdampfertemperatur berechnet, die größer als 3 K sein muss.

Durch eine Erhöhung der Kälteleistung der Kälteanlage und einer damit verbundenen Absenkung der Verdampfertemperatur in dem Betriebszustand mit Kondensatbildung an dem Verdampfer 7 kann durch die Verringerung der Verdampfertemperatur die Differenz zwischen der Temperatur der Windschutzscheibe und der Verdampfertemperatur erhöht werden. Die vierte Antibeschlag-Maßnahme wird vorzugsweise wieder abgeschaltet, wenn mit der ersten, zweiten und/oder dritten Antibeschlag-Maßnahme die Mindestdifferenz wieder eingehalten werden kann.

Bei einer geregelten Trocknung des Verdampfers 7 kann als Antibeschlags-Maßnahme die Temperatur der Luft nach dem Verdampfer 7 abgesenkt werden, so dass weniger Feuchtigkeit auf dem Verdampfer 7 verdunstet, wobei die Temperatur der Luft nach dem Verdampfer 7 größer ist als der Vorverdampfer-Taupunkt.

In beiden Betriebszuständen, sowohl mit als auch ohne Kondensatbildung an dem Verdampfer 7, kann die Heizvorrichtung 16 ein- oder ausgeschaltet sein. Der Betrieb der Heizvorrichtung hat auf den Taupunkt der Luft am Verdampfer 7 bzw. der Taupunktes der zu der Windschutzscheibe geleiteten Luft keinen Einfluss, weil durch das Erwärmen der Luft die absolute Luftfeuchtigkeit nicht verändert wird. Lediglich die Temperatur der Windschutzscheibe kann sich bei eingeschalteter Heizvorrichtung 16 erhöhen, was jedoch berücksichtigt wird aufgrund des Heizungstemperatursensors 20, weil die Differenz zwischen der Temperatur der Windschutzscheibe und dem Taupunkt der Luft am Verdampfer 7 maßgeblich ist. Bei einer höheren Temperatur der zu der Windschutzscheibe geleiteten Luft wegen einer eingeschalteten Heizvorrichtung 16 wird dies wegen der höhen Temperatur der Windschutzscheibe berücksichtigt.

Fig. 6 zeigt in einem Blockschaltbild stark vereinfacht die Vorgehensweise. Mittels eines Rechenmodels wird die Temperatur der Windschutzscheibe (T_WS) ermittelt. Aus den von dem Verdampfertemperatursensor 19 und dem Feuchtigkeitssensor 21 in Strömungsrichtung nach dem Verdampfer 7 ermittelten Daten wird anhand eines hX-Diagrammes der Taupunkt der Luft (TP_VD) an dem Verdampfer 7 bestimmt. Die Regeleinheit 15 regelt die Kraftfahrzeugklimaanlage 1, so dass die Differenz zwischen der Temperatur der Windschutzscheibe (T_WS) und dem Taupunkt der Luft (TP_VD) größer als 3 K ist (ΔT= 3 K). Hierfür stehen die Antibeschlag-Maßnahmen 1.) bis 4.) zur Verfügung, wobei zuerst die in Fig. 6 oben aufgeführten Antibeschlag-Maßnahmen ergriffen werden und erst wenn die weiter oben aufgeführten Antibeschlag-Maßnahmen nicht mehr ausreichen, auch weiter unten stehende Antibeschlag-Maßnahmen eingeleitet werden.

Das erfindungsgemäße Verfahren wird bei der Regelung der Kraftfahrzeugklimaanlage neben anderen zu regelnden Parametern, z. B. der von dem Fahrzeuginsassen gewünschten Temperatur im Innenraum, ausgeführt, um ein Beschlagen der Windschutzscheibe zu verhindern.

Insgesamt betrachtet sind mit dem erfindungsgemäßen Verfahren und der erfindungsgemäßen Kraftfahrzeugklimaanlage 1 wesentliche Vorteile verbunden. Die Regelung der Kraftfahrzeugklimaanlage 1 berücksichtigt den Trocknungsbedarf des Verdampfers 7 und vorzugsweise die Temperatur der Windschutzscheibe, um einen gezieltes Trocknen des Verdampfers 7 zu ermöglichen und ein Beschlagen der Scheiben mit einem geringen Energieaufwand unter Berücksichtigung der Temperatur und/oder der relativen Feuchtigkeit nur der Frischluft und/oder nur der Umluft zu vermeiden.

### Bezugszeichenliste

- 1: Kraftfahrzeugklimaanlage
- 2: Luftkanal
- 3: Schacht für Umluft
- 4: Schacht für Frischluft,
- 5: Mischklappe
- 6: Gebläse
- 7: Verdampfer
- 8: Wärmetauscher
- 9: Schacht für Entfrostungsöffnung
- 10: Schacht für Öffnungen an Armaturentafel
- 11: Schacht für Öffnungen am Fußbereich
- 12: Klappe für Schacht 9
- 13: Klappe für Schacht 10
- 14: Klappe für Schacht 11
- 15: Steuerungs- und/oder Regelungseinheit
- 16: Heizvorrichtung
- 17: Temperatursensor, erster 17a, zweiter 17b
- 18: Feuchtigkeitssensor, erster 18a, zweiter 18b
- 19: Verdampfertemperatursensor
- 20: Heizungstemperatursensor
- 21: Feuchtigkeitssensor
- 22: Doppelsensor
- 24: Umluftklappe
- 25: Frischluftklappe
- 26: Umluftleitung
- 27: Frischluftleitung
- 28: Verdampferluftleitung
- 29: Dreifachsensor
TP_VD Taupunkt der Luft am Verdampfer
T_WS Temperatur der Windschutzscheibe
"abs_Wassermenge_evapo_out" oder "evapo_out" absolute Feuchtigkeit der Luft nach dem Verdampfer
"abs_Wassermenge_evapo_in" oder "evapo_in" absolute Feuchtigkeit der Luft vor dem Verdampfer

## Patentansprüche

1. Verfahren zur Regelung einer Kraftfahrzeugklimaanlage (1) mit den Schritten:
- Erfassen einer Temperatur der Luft unmittelbar nach dem Durchströmen eines Verdampfers (7) in einem Luftkanal(2),
- Leiten von Frischluft und/oder Umluft zu dem Verdampfer (7),
- Leiten von Luft durch den Verdampfer (7),
- Kühlen der durch den Verdampfer (7) geleiteten Luft,
- Umwälzen der Luft mittels eines Gebläses (6) und
- Ermitteln der Temperatur einer Windschutzschutzscheibe,
wobei,
- die absolute Feuchtigkeit der Luft vor und unmittelbar nach dem Durchströmen des Verdampfers (7) ermittelt wird,
- wenigstens eine Maßnahme zur Trocknung des Verdampfers (7) eingeleitet wird, sofern die absolute Feuchtigkeit der Luft nach dem Durchströmen des Verdampfers größer ist als die absolute Feuchtigkeit der Luft vor dem Durchströmen des Verdampfers,
- oder die relative Feuchtigkeit der Luft vor und unmittelbar nach dem Durchströmen des Verdampfers (7) erfasst wird, sofern die Temperatur der Luft vor und nach dem Durchströmen des Verdampfers (7) im Wesentlichen gleich ist und
- wenigstens eine Maßnahme zur Trocknung des Verdampfers (7) eingeleitet wird, sofern die relative Feuchtigkeit der Luft unmittelbar nach dem Durchströmen des Verdampfers größer ist als die relative Feuchtigkeit der Luft vor dem Durchströmen des Verdampfers
**dadurch gekennzeichnet, dass**
die Temperatur der Luft vor dem Durchströmen des Verdampfers (7) oder die absolute Feuchtigkeit der Luft vor dem Durchströmen des Verdampfers oder die relative Feuchtigkeit der Luft vor dem Durchströmen des Verdampfers in dem Luftkanal (2) ermittelt wird, indem von einem ersten Temperatursensor (17a) die Temperatur und/oder von einem ersten Feuchtigkeitssensor (18a) die relative Feuchtigkeit nur der Frischluft vor dem Durchströmen des Verdampfers (7) erfasst wird und von einem zweiten Temperatursensor (17b) die Temperatur und/oder von einem zweiten Feuchtigkeitssensor (18b) die relative Feuchtigkeit nur der Umluft vor dem Durchströmen des Verdampfers (7) erfasst wird.

2. Verfahren nach Anspruch 1, **dadurch gekennzeichnet, dass** die Frischluft aus einem Schacht (4) für Frischluft durch eine Frischluftleitung (27) zu dem ersten Temperatursensor (17a) und dem ersten Feuchtigkeitssensor (18a) geleitet wird und/oder
die Umluft aus einem Schacht (3) für Umluft durch eine Umluftleitung (26) zu dem zweiten Temperatursensor (17b) und dem zweiten Feuchtigkeitssensor (18b) geleitet wird.

3. Verfahren nach Anspruch 1 oder 2, **dadurch gekennzeichnet, dass** die absolute Feuchtigkeit der Luft nach dem Durchströmen des Verdampfers (7) ermittelt wird, indem die relative Feuchtigkeit der Luft nach dem Durchströmen des Verdampfers (7) in der Kraftfahrzeugklimaanlage (1) erfasst und aus der Temperatur und der relativen Feuchtigkeit der Luft nach dem Durchströmen des Verdampfers (7) und die absolute Feuchtigkeit der Luft nach dem Durchströmen des Verdampfers (7) ermittelt wird.

4. Verfahren nach einem oder mehreren der vorhergehenden Ansprüche, **dadurch gekennzeichnet, dass** die erfasste Temperatur und/oder relative Feuchtigkeit nur der Frischluft und/oder nur der Umluft für die Steuerung und/oder Regelung der Kraftfahrzeugklimaanlage (1) genutzt wird.

5. Verfahren nach einem oder mehreren der vorhergehenden Ansprüche, **dadurch gekennzeichnet, dass**
- aus der Temperatur und der relativen Feuchtigkeit der Luft vor und/oder nach dem Durchströmen des Verdampfers (7) in der Kraftfahrzeugklimaanlage (1) ein Vorverdampfer-Taupunkt und/oder ein Nachverdampfer-Taupunkt ermittelt wird,
- ein Taupunkt der Luft am Verdampfer (7) ermittelt wird, wobei der Taupunkt der Nachverdampfer-Taupunkt oder die Temperatur der Luft nach dem Durchströmen des Verdampfers ist und
- der Taupunkt der Luft am Verdampfer (7) mit der Temperatur der Windschutzscheibe verglichen wird und die Kraftfahrzeugklimaanlage (1) geregelt wird, so dass der Taupunkt kleiner ist als die Temperatur der Windschutzscheibe.

6. Verfahren nach Anspruch 5, **dadurch gekennzeichnet, dass** als Maßnahme zur Trocknung des Verdampfers (7) die Kraftfahrzeugklimaanlage (1) geregelt wird, so dass die Temperatur der Luft nach dem Durchströmen des Verdampfers (7) größer ist als der Vorverdampfer-Taupunkt und/oder der Frischluftanteil der durch den Verdampfer (7) geleiteten Luft erhöht wird und/oder die Gebläseleistung erhöht wird.

7. Verfahren nach Anspruch 6, **dadurch gekennzeichnet, dass** die Temperatur der Luft nach dem Durchströmen des Verdampfers (7) geringfügig größer ist als der Vorverdampfer-Taupunkt, insbesondere die Temperatur der Luft nach dem Durchströmen des Verdampfers (7) um weniger als 10, 5, 4, 3, 2, 1 oder 0,5 K größer ist als der Vorverdampfer-Taupunkt.

8. Verfahren nach einem oder mehreren der vorhergehenden Ansprüche, **dadurch gekennzeichnet, dass** während der wenigstens einen Maßnahme zur Trocknung des Verdampfers (7) der Verdampfer (7) bzw. eine Kälteanlage abgeschaltet ist oder die Luft am Verdampfer (7) gekühlt wird, wobei die Temperatur der Luft nach dem Durchströmen des Verdampfers (7), vorzugsweise geringfügig, größer ist als der Vorverdampfer-Taupunkt, insbesondere die Temperatur der Luft nach dem Durchströmen des Verdampfers (7) um weniger als 10, 5, 4, 3, 2, 1 oder 0,5 K größer ist als der Vorverdampfer-Taupunkt und/oder, vorzugsweise anschließend, die Kühlleistung des Verdampfers (7) verringert wird zum Abschalten des Verdampfers (7) bzw. der Kälteanlage.

9. Verfahren nach Anspruch 8, **dadurch gekennzeichnet, dass** beim Abschalten des Verdampfers (7) bzw. der Kälteanlage solange die Temperatur der Luft nach dem Durchströmen des Verdampfers (7) geringfügig größer ist als der Vorverdampfer-Taupunkt, insbesondere die Temperatur der Luft nach dem Durchströmen des Verdampfers (7) um weniger als 10, 5, 4, 3, 2, 1 oder 0,5 K größer ist als der Vorverdampfer-Taupunkt, bis die absolute oder relative Feuchtigkeit der Luft vor und nach dem Durchströmen des Verdampfers (7) im Wesentlichen gleich ist, insbesondere mit einer Abweichung von weniger als 30, 20, 10, 5, 2 oder 1 %.

10. Kraftfahrzeugklimaanlage (1), umfassend einen Verdampfer (7), ein Gebläse (6), eine Heizvorrichtung (8, 16) und einen Verdampfertemperatursensor (19) und einen Feuchtigkeitssensor (21) zur Erfassung der relativen Feuchtigkeit der Luft in einem Luftkanal (2) nach dem Durchströmen des Verdampfers (7) und eine Steuerungs- und/oder Regeleinheit (15), **dadurch gekennzeichnet, dass** die Kraftfahrzeugklimaanlage (1) einen ersten Temperatursensor (17a) zur Erfassung der Temperatur und einen ersten Feuchtigkeitssensor (18a) zur Erfassung relativen Feuchtigkeit nur der Frischluft, von Frischluft aus einem Schacht (4) für Frischluft vor dem Durchströmen des Verdampfers (7), umfasst und einen zweiten Temperatursensor (17b) zur Erfassung der Temperatur und einen zweiten Feuchtigkeitssensor (18b) zur Erfassung der relativen Feuchtigkeit nur der Umluft, von Umluft aus einem Schacht (3) für Umluft vor dem Durchströmen des Verdampfers (7), umfasst und mit der Steuerungs-und/oder Regeleinheit (15) ein Verfahren gemäß einem oder mehrerer der Ansprüche 1 bis 9 ausführbar ist, wobei der erste Temperatursensor (17a) sowie der erste Feuchtigkeitssensor (18a) und der zweite Temperatursensor (17b) sowie der zweite Feuchtigkeitssensor (18b) zu einem Doppelsensor (22) integriert sind.

11. Kraftfahrzeugklimaanlage nach Anspruch 10, **dadurch gekennzeichnet, dass** der Verdampfertemperatursensor (19) sowie der Feuchtigkeitssensor (21) als Dreifachsensor zusammen mit dem ersten und zweiten Temperatursensor (17a, 17b) und dem ersten und zweiten Feuchtigkeitssensor (18a, 18b) integriert sind.

12. Kraftfahrzeugklimaanlage nach einem oder mehreren der Ansprüche 10 bis 11, **dadurch gekennzeichnet, dass** die Kraftfahrzeugklimaanlage (1) eine Frischluftleitung (27) und eine Umluftleitung (26) umfasst und durch die Frischluftleitung (27) aus einem Schacht (4) für Frischluft Frischluft zu dem ersten Temperatursensor (17a) und dem ersten Feuchtigkeitssensor (18a) leitbar ist und durch die Umluftleitung (26) aus einem Schacht (3) für Umluft Umluft zu dem zweiten Temperatursensor (17b) und dem zweiten Feuchtigkeitssensor (18b) leitbar ist.

13. Kraftfahrzeugklimaanlage nach einem oder mehreren der Ansprüche 10 bis 12, **dadurch gekennzeichnet, dass** die Kraftfahrzeugklimaanlage (1) eine Verdampferluftleitung (28) umfasst und durch die Verdampferluftleitung (28) durch den Verdampfer (7) geleitete Luft zu dem Verdampfertemperatursensor (19) und dem Feuchtigkeitssensor (21) leitbar ist.

14. Kraftfahrzeugklimaanlage nach Anspruch 13, **dadurch gekennzeichnet, dass** der Verdampfertemperatursensor (19) und der Feuchtigkeitssensor (21) in dem Luftkanal (2) in Strömungsrichtung der Luft vor einem Gebläse (6) angeordnet sind.

## Claims

1. A method for regulating a motor vehicle air conditioner (1) having the following steeps:
- detecting a temperature of the air immediately after flowing through a vaporizer (7) in an air duct (2),
- conducting fresh air and/or circulating air to the vaporizer (7),
- conducting air through the vaporizer (7),
- cooling the air conducted through the vaporizer (7),
- circulating the air by means of a fan (6), and
- ascertaining the temperature of a windshield,
herein
- the absolute humidity of the air is ascertained before and immediately after flowing through the vaporizer (7),
- at least one measure for drying the vaporizer (7) is initiated, if the absolute humidity of the air after flowing through the vaporizer is greater than the absolute humidity of the air before flowing through the vaporizer,
- or the relative humidity of the air before and immediately after flowing through the vaporizer (7) is detected, if the temperature of the air before and after flowing through the vaporizer (7) is essentially equal, and
- at least one measure for drying the vaporizer (7) is initiate if the relative humidity of the air immediately after flowing through the vaporizer is greater than the relative humidity of the air before flowing through the vaporizer,
**characterized in that** the temperature of the air before flowing through the vaporizer (7) or the absolute humidity of the air before flowing through the vaporizer or the relative humidity of the air before flowing through the vaporizer is ascertained in the air duct (2) **in that** the temperature is detected by a first temperature sensor (17a) and/or the relative humidity of only the fresh air before flowing through the vaporizer (7) is detected by a first humidity sensor (18a) and the temperature is detected by a temperature sensor (17b) and/or the relative humidity of only the circulating air before flowing through the vaporizer (7) is detected by a second humidity sensors (18b).

2. The method according to claim 1, **characterized in that** the fresh air is conducted from a shaft (4) for fresh air through a fresh air line (27) to the first temperature sensor (17a) and the first humidity sensor (18a)
and/or the circulating air is conducted from a shaft (3) for circulating air through a circulating air line (26) to the second temperature sensor (17b) and the second humidity sensor (18b).

3. The method according claim 1 or 2, characterized ire that the absolute humidity of the air after flowing through the vaporizer, (7) is ascertained in that the relative humidity of the air is detected after flowing through the vaporizer, (7) in the motor vehicle air conditioner (1) and the absolute humidity of the air after flowing through the vaporizer (7) is ascertained from the temperature and the relative humidity of the air after flowing through the vaporizer (7).

4. The method according to one or more of the preceding claims, **characterized in that** the detected temperature and/or relative humidity of only the fresh air and/or only the circulating air is used for the control and/or regulation of the motor vehicle air conditioner (1).

5. The method according to one or more of the preceding claims, **characterized in that**
- a pre-vaporizer dewpoint and/or a post-vaporizer dewpoint is ascertained from the temperature and the relative humidity of the air before and/or after flowing through the vaporizer (7) in the motor vehicle air conditioner (1),
- a dewpoint of the air at the vaporizer (7) is ascertained, wherein the dewpoint is the post-vaporizer dewpoint or the temperature of the air after flowing through the vaporizer, and
- the dewpoint of the air at the vaporizer (7) is compared to the temperature of the windshield and the motor vehicle air conditioner (1) is regulated so that the dewpoint is less than the temperature of the windshield.

6. The method according to claim 5, **characterized in that**, as a measure for drying the vaporizer (7), the motor vehicle air conditioner (1) is regulate so that the temperature of the air after flowing through the vaporizer (7) is greater than the pre-vaporizer, dewpoint and/or the fresh air component of the air conducted through the vaporizer (7) is increased and/or the fan power is increased.

7. The method according to claim 6, **characterized in that** the temperature of the air after flowing through the vaporizer (7) is slightly greater than the pre-vaporizer dewpoint, in particular the temperature of the air after flowing through the vaporizer (7) is greater by less than 10, 5, 4, 3, 2, 1,or 0.5 K than the pre-vaporizer dewpoint.

8. The method according to one or more of the preceding claims, **characterized in that**, during the at least one measure for drying the vaporizer (7), the vaporizer (7) or a cooling system is shut down or the air is cooled at the vaporizer (7), wherein the temperature of the air after flowing through the vaporizer (7) is preferably slightly greater than the pre-vaporizer dewpoint, in particular the temperature of the air after flowing through the vaporizer (7) is greater by less than 10, 5, 4, 3, 2, 1, or 0. 5 K than the pre-vaporizer dewpoint, and/or, preferably subsequently, the cooling power of the vaporizer (7) is decreased for the shut down of the vaporizer (7) or the cooling system.

9. The method according to claim 8, **characterized in that**, upon the shutdown of the vaporizer (7) or the cooling system, as long as the temperature of the air after flowing through the vaporizer (7) is slightly greater than the pre-vaporizer dewpoint, in particular the temperature of the air after flowing through the vaporizer (7) is greater by less than 10, 5, 4, 3, 2, 1, or 0.5 K than the pre-vaporizer dewpoint, until the absolute or relative humidity of the air before and after flowing through the vaporizer (7) is essentially equal, in particular with a deviation of less than 30, 20, 10, 5, 2, or 1%.

10. A motor vehicle air conditioner (1), comprising a vaporizer (7), a fan (6), a hefting devise (8, 16), and a vaporizer temperature sensor (19) and a humidity sensor (21) for detecting the relative humidity of the air in an air duct (2) after flowing through the vaporizer (7), and a control and/or regulating unit (15), **characterized in that** the motor vehicle air conditioner (1) comprises a first temperature sensor (17a) for detecting the temperature and a first humidity sensor (18a) for detecting relative humidity of only the fresh air, of fresh air from a shaft (4) for fresh air before flowing through the vaporizer (7), and comprises a second temperature sensor (17b) for detecting the temperature and a second humidity sensor (18b) for detecting the relative humidity of only the circulating air, of circulating air from a shaft (3) for circulating air before flowing through the vaporizer (7), and a method according to one or more of Claims 1 to 9 can be executed using the control and/or regulating unit (15), wherein the first temperature sensor (17a) and the first humidity sensor (18a) and the second temperature sensor (17b) and the second humidity sensor (18b) are integrated to form a double sensor (22).

11. The motor vehicle air conditioner according to claim 10, **characterized in that** the vaporizer temperature sensor (19) and the humidity sensor (21) are integrated to form a triple sensor together with the first and second temperature sensors (17a, 17b) and the first and second humidity sensors (18a, 18b).

12. The motor vehicle air conditioner according to one or more of claims 10 to 11, **characterized in that** the motor vehicle air conditioner (1) comprises a fresh air line (27) and a circulating air line (26) and fresh air can be conducted through the fresh air line (27) from a shaft (4) for fresh air to the first temperature sensor (17a) and the first humidity sensor (18a) and circulating air can be conducted through the circulating air line (26) from a shaft (3) for circulating air to the second temperature sensor (17b) and the second humidity sensor (18b).

13. The motor vehicle air conditioner according to one or more of claims 10 to 12, **characterized in that** the motor vehicle air conditioner (1) comprises a vaporizer air line (28) and air conducted through the vaporizer air line (28) can be conducted through the vaporizer, (7) to the vaporizer temperature sensor (19) and the humidity sensor (21).

14. The motor vehicle air conditioner according to claim 13, **characterized in that** the vaporizer, temperature sensor (19) and the humidity sensor (21) are arranged in the air duct (2) before a fan (6) in the flow direction of the air.

## Revendications

1. a Procédé de régulation d'un système de climatisation (1) d'un véhicule automobile comprenait les étapes consistant :
- à déterminer, dans une conduit d'air (2), une température de l'air immédiatement après la traversée d'un évaporateur (7),
- à diriger de l'air frais et / ou de l'air ambiant vers l'évaporateur (7),
- à diriger de l'air à travers l'évaporateur (7),
- à refroidir l'air dirigé à travers l'évaporateur (7),
- à faire circule l'air au moyen d'un pulser (6) et
- à déterminer la température d'un pare-brise,
où
- l'humidité absolue de l'air est déterminée avant et immédiatement après la traversée de l'évaporateur (7),
- au moins une mesure servant au séchage de l'évaporateur (7) est mise en oeuvre, dans la mesure où l'humidité absolue de l'air, après la traversée de l'évaporateur, est supérieure à l'humidité absolue de l'air avant la traversée de l'évaporateur,
- ou bien l'humidité relative de l'air est détectée avant et immédiatement après la traversée de l'évaporateur (7), dans la mesure où la température de l'air, avant et après la traversée de l'évaporateur (7), est pratiquement la même, et
- au moins une mesure servant au séchage de l'évaporateur (7) est mise en oeuvre, dans la mesure où l'humidité relative de l'air, immédiatement après la traversée de l'évaporateur, est supérieure à l'humidité relative de l'air avant la traversée de l'évaporateur, **caractérisé en ce que**
la température de l'air avant la traversée de l'évaporateur (7), ou bien l'humidité absolue de l'air avant la traversée de l'évaporateur, ou bien l'humidité relative de l'air avant la traversée de l'évaporateur, est déterminée dans le conduit d'air (2), tandis que la température et / ou l'humidité relative, seulement de l'air frais, avant la traversée de l'évaporateur (7), est détectée respectivement par un premier capteur de température (17a) et par une premier capteur d'humidité (18a), et la température est / ou l'humidité relative, seulement de l'air ambiant, avant la traversée de l'évaporateur (7), est détectée respectivement par un deuxième capteur de température (17b) et par un deuxième capteur d'humidité (18b).

2. Procédé selon la revendication 1, **caractérisé en ce que** l'air frais provenant d'un puits (4) prévu pour de l'air frais est dirigé à travers une conduite d'air frais (27), jusqu'au premier capteur de température (17a) et au premier capteur d'humidité (18a)
et / ou
l'air ambiant provenant d'un puits (3) prévu pour de l'air ambiant est dirigé à travers une conduite d'air ambiant (26), jusqu'au deuxième capteur de température (17b) et au deuxième capteur d'humidité (18b).

3. Procédé selon la revendication 1 on 2, **caractérisé en ce que** l'humidité absolue de l'air est déterminée après la traversée de l'évaporateur (7), tandis que l'humidité relative de l'air, dans le système de climatisation (1) d'un véhicule automobile, est détectée après la traversée de l'évaporateur (7), et l'humidité absolue de l'air après la traversée de l'évaporateur (7) est déterminée d'après la température est l'humidité relative de l'air après la traversée de l'évaporateur (7).

4. Procédé selon l'une quelconque ou plusieurs des revendication précédentes, **caractérisé en ce que** la température détectée et / ou l'humidité relative détectée seulement de l'air frais et / ou seulement de l'air ambiant est utilisée pour la commande et / ou la régulation du système de climatisation (1) d'un véhiculé automobile.

5. Procédé selon l'une quelconque ou plusieurs des revendication précédentes, **caractérisé en ce que**
- un point de rosée de préévaporateur et / ou un point de rosée de post-évaporateur est déterminé, dans le système de climatisation (1) du véhicule automobile, d'après la température et l'humidité relative de l'air avant et / ou après la traversée de l'évaporateur (7),
- un point de rosée de l'air est déterminé au niveau de l'évaporateur (7), le point de rosée étant le point de rosée du post-évaporateur ou la température de l'air après la traversée de l'évaporateur, et
- le point de rosée de l'air au niveau de l'évaporateur (7) est comparé à la température du pare-brise, et le système de climatisation (1) du véhicule automobile est réglé de manière telle, que le point de rosée soit inférieur à la température du pare-brise.

6. Procédé selon la revendication 5, **caractérisé en ce que**, comme mesure servant au séchage de l'évaporateur (7), le système de climatisation (1) du véhicule automobile est réglé de marnière telle, que la température de l'air, après la traversée de l'évaporateur (7), soit supérieure au point de rosée du préévaporateur et / ou que la proportion d'air frais de l'air dirigé à travers l'évaporateur (7) soit augmentée et / ou que la puissance du pulser soit augmentée.

7. Procédé selon la revendication 6, **caractérisé en ce que** la température de l'air, après la traversée de l'évaporateur (7), est légèrement supérieure au point de rosée du préévaporateur, en particulier la température de l'air après la traversée de l'évaporateur (7) est supérieure au point de rosée du préévaporateur de moins de 10, 5, 4, 3, 2, 1 ou 0,5 K.

8. Procédé selon l'une quelconque ou plusieurs des revendications précédentes, **caractérisé en ce que**, au coures de la mesure, au moins au nombre de un, servant au séchage de l'évaporateur (7), l'évaporateur (7) ou une système de réfrigération est arrêté, ou bien l'air au niveau de l'évaporateur (7) est refroidi, où la température de l'air après la traversée de l'évaporateur (7) est, de préférence légèrement, supérieure au point de rosée du préévaporateur, en particulier la température de l'air après la traversée de l'évaporateur (7) est supérieure au point de rosée du préévaporateur de moins de 10, 5, 4, 3, 2, 1 ou 0, 5 K, et / ou, de préférence ensuite, la puissance de refroidissement de l'évaporateur (7) est réduite, allant jusqu'à l'arrêt de l'évaporateur (7) ou du système de réfrigération.

9. Procédé selon la revendication 8, **caractérisé en ce que** pendant l'arrêt de l'évaporateur (7) ou du système de réfrigération, aussi longtemps que la température de l'air après la traversée de l'évaporateur (7) est légèrement supérieure au point de rosée du préévaporateur, en particulier aussi longtemps que la température de l'air après la traversée de l'évaporateur (7) est supérieure au point de rosée du préévaporateur de moins de 10, 5, 4, 3, 2, 1 ou 0,5 K, jusqu'à ce que l'humidité absolue ou relative de l'air, avant et après la traversée de l'évaporateur (7), soit pratiquement la même, en particulier avec un écart de moins de 30, 20, 10, 5, 2 ou 1 %.

10. Système de climatisation (1) d'un véhicule automobile, comprenant un évaporateur (7), un pulseur (6), un dispositif de chauffage (8, 16), un capteur de température d'évaporateur (19) et un capteur d'humidité (21) servant à détecter l'humidité relative de l'air dans un conduit d'air (2), après la traversée de l'évaporateur (7), et comprenant une unité de commande et / ou de régulation (15), **caractérisé en ce que** le système de climatisation (1) du véhicule automobile comprend un premier capteur de température (17a) servant à détecter la température, et un premier capteur d'humidité (18a) servant à détecter l'humidité relative seulement de l'air frais, d'air frais provenait d'un puits (4) prévu pour de l'air frais, avant la traversés de l'évaporateur (7), et comprend un deuxième capteur de température (17b) servant à détecter la température et un deuxième capteur d'humidité (18b) servant à détecter l'humidité relative seulement de l'air ambiant, d'air ambiant provenait d'un puits (3) prévu pour de l'air ambiant, avant la traversée de l'évaporateur (7), et, avec l'ensemble de commande et / ou de régulation (15), un procédé peut être mis en oeuvre conformément à l'une quelconque ou plusieurs des revendications 1 à 9, ou le premier capteur de température (17a) ainsi que le premier capteur d'humidité (18a), et le deuxième capteur de température (17b) ainsi que le deuxième capteur d'humidité (18b), sont intégrés pour former un double capteur (22).

11. Système de climatisation d'un véhicule automobile selon la revendication 10, **caractérisé en ce que** le capteur de température (19) de l'évaporateur ainsi que le capteur d'humidité (21) sont intégrés avec le premier et le deuxième capteur de température (17a, 17b) et avec le premier et le deuxième capteur d'humidité (18a, 18b), pour former un triple capteur.

12. Système de climatisation d'un véhicule automobile selon la revendication 10 ou 11 ou selon ces deux revendication, **caractérisé en ce que** le système de climatisation (1) du véhicule automobile comprend une conduite d'air frais (27) et une conduite d'air ambiant (26), et de l'air frais promenant d'un puits (4) prévu pour de l'air frais peut être fourni au premier capteur de température (17a) et au premier capteur d'humidité (18a), à travers la conduite d'air frais (27), et de l'air ambiant provenait d'un puits (3) prévu pour de l'air ambiant peut être fourni au deuxième capteur de température (17b) et au deuxième capteur d'humidité (18b), à travers la conduite d'air ambiant (26).

13. Système de climatisation d'un véhicule automobile selon l'une quelconque ou plusieurs des revendication 10 à 12, **caractérisé en ce que** le système de climatisation (1) du véhicule automobile comprend une conduite d'air d'évaporateur (28), et de l'air dirigé à travers l'évaporateur (7), via la conduite d'air d'évaporateur (28), peut être fourni au capteur de température (19) de l'évaporateur est au capteur d'humidité (21).

14. Système de climatisation d'un véhicule automobile selon la revendication 13, **caractérisé en ce que** le capteur de température (19) de l'évaporateur et le capteur d'humidité (21) sont disposés dans le conduit d'air (2), suivant la direction d'écoulement de l'air, en amont d'un pulseur (6).
